# EUROPÄISCHE PATENTSCHRIFT

(11) **EP 3 658 922 B1**
(45) Veröffentlichungstag und Bekanntmachung des Hinweises auf die Patenterteilung: **01.12.2021**
(21) Anmeldenummer: 18740156.7
(22) Anmeldetag: 05.07.2018
(51) Int. Cl.: G01P 21/02, G01P 3/487, G01B 5/14, G01B 11/14

(54) **VERFAHREN UND VORRICHTUNG ZUR FEHLERANALYSE EINER GESCHWINDIGKEITSERFASSUNG**
METHOD AND DEVICE FOR THE ERROR ANALYSIS OF SPEED SENSING
PROCÉDÉ ET DISPOSITIF D'ANALYSE DE DÉFAUT D'UNE ACQUISITION DE VITESSE

(30) Priorität: 27.07.2017 DE 102017212952
(43) Veröffentlichungstag der Anmeldung: 03.06.2020
(73) Patentinhaber: Robert Bosch GmbH, 70442 Stuttgart (DE)
(72) Erfinder: STEGMAIER, Juergen, 72074 Tuebingen (DE); GREINER, Rinaldo, 72762 Reutlingen (DE)
(86) Internationale Anmeldenummer: PCT/EP2018/068206
(87) Internationale Veröffentlichungsnummer: WO 2019/020338

(56) Entgegenhaltungen:
- DE-A1- 19 932 911
- US-B1- 6 265 863
- US-B2- 9 267 800

## Beschreibung

Die Erfindung betrifft ein Verfahren, ein Computerprogramm sowie eine Analyseeinheit zur Fehleranalyse einer Geschwindigkeitserfassung.

### Stand der Technik

Zur berührungslosen Abstands- und Einbaulagenmessung von rotierenden Teilen werden sowohl optische als auch magnetische Sensoren verwendet. So erfolgt beispielsweise die Geschwindigkeitsmessung bei Fahrrädern während der Fahrt mittels magnetischer Raddrehzahlsensoren, mit denen die Drehung der Fahrradreifen erfasst wird. Dabei sind die Raddrehzahlsensoren als Magnetsensoren beispielsweise ortsfest an der Vorderradgabel oder Hinterradgabel vorgesehen, die bei jedem Durchlauf eines Magneten, der an der Speiche montiert ist, einen Impuls liefert. Aus dem zeitlichen Abstand zweier Impulse kann so auf die Drehgeschwindigkeit des Rads und mittels eines Umrechnungsfaktors auf die Geschwindigkeit des Fahrzeugs bzw. Fahrrads geschlossen werden. Für die Berechnung der Geschwindigkeit ist eine Kenntnis über den Umfang des Rades nötig. Nachteilig bei einer derartigen Geschwindigkeitserfassung ist die notwendige Zeitdauer, da zumindest zwei Impulse registriert werden müssen. Bei sehr langsamen Drehbewegungen ist daher die Erfassung sehr träge. Weiterhin besteht bei dieser Form der Geschwindigkeitserfassung sehr leicht die Möglichkeit einer Manipulation. Auch die Erfassung der Bewegungsrichtung des Rades ist alleine aus diesen Signalen nicht ableitbar, da sowohl eine Vorwärts- als auch eine Rückwärtsfahrt die gleichen Messsignale liefern würde.

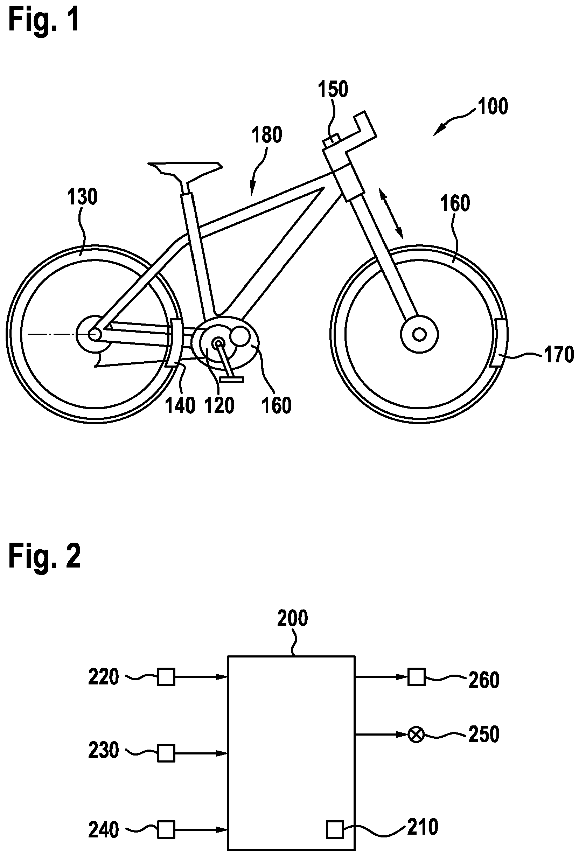

Eine weitere Möglichkeit, mittels der Erfassung von Magnetfeldsensorsignalen sowohl die Bewegungsrichtung, die Drehgeschwindigkeit als auch das Drehverhalten eines Rades 130 bzw. 160 eines Zweirads 100 (siehe Figur 1) zu erfassen, ist in den nicht vorveröffentlichten Schriften DE-A-102017212905, DE-A-102017212911 und DE-A-102017212903 beschrieben. Die dort beschriebenen Geschwindigkeitserfassungssysteme ermöglichen durch einen zum Beispiel in der Antriebseinheit 110 angeordneten ersten Magnetsensor 120 die Erfassung von Magnetfeldsensorsignalen wenigstens eines in das Hinterrad 130 und/oder Vorderrad 160 eingebrachten Magneten 140 bzw. 170. Über die so erfassten Magnetfeldsensorsignale, die während der Drehung des entsprechenden Rades in ihrer Intensität schwanken oder sogar aufgrund der Entfernung gänzlich unmessbar werden, kann neben der Geschwindigkeit des Rades bzw. des Zweirads auf den Abstand zwischen Magneten und Magnetsensor, Verdrehung des Hinterrads 130 in Bezug auf den Rahmen 180 in einer Ebene bestehend aus der Fortbewegungsrichtung x und der Hochachse y sowie auf einen Höhen- und/oder Seitenschlag des Hinterrads 130 geschlossen werden. Weiterhin ist möglich, einen falschen Radeinbau des Hinterrads 130 sowie eine Lenkbewegung des Vorderrads 160 zu erkennen. Die entsprechende Auswertung der Magnetfeldsensorsignale kann in einem Steuergerät 150 für den Motor 110 oder einer anderen Steuer- und/oder Auswerteeinheit 240 erfolgen. Alternativ zur Anordnung des ersten Magnetsensors 120 im oder am Motor 110 kann dieser auch direkt am Rahmen, am Sattel, am Gepäckträger, am Lenker, am Vorbau oder an einer Energiequelle für den Motor 110 angebracht sein. Weiterhin ist möglich, dass auch mehrere Magnete an jeweils einem Rad 130 bzw. 160 angebracht sind. Vorteilhafterweise sind die Magnete dabei in Mantelnähe oder auf der Felge aufgebracht.

US-B-9267800 beschreibt ein bekanntes System zur Geschwindigkeitserfassung in einem Zweirad. Ein Magnet ist am Rad montiert, ein Sensor ist mit dem Lenker verbunden.

US-B-6265863 beschreibt ein System zur Geschwindigkeitserfassung in einem Fahrzeug, bei dem die Amplitude des erzeugten Signals überwacht wird.

Mit der vorliegenden Erfindung soll ein Verfahren, ein Computerprogramm sowie eine Analyseeinheit beschrieben werden, mit dem bzw. mit der eine Fehleranalyse betrieben werden kann, falls eine der eingesetzten Komponenten bei einem Geschwindigkeitserfassungssystem der eingangs beschriebenen Art für ein Fahrzeug bzw. ein Zweirad, insbesondere ein Elektrofahrrad, nicht ordnungsgemäß funktioniert.

### Offenbarung der Erfindung

Die Erfindung beansprucht ein Verfahren, ein Computerprogramm sowie eine Analyseeinheit zur Fehleranalyse eines Geschwindigkeitserfassungssystems an einem Zweirad wie beispielsweise einem Elektrofahrrad. Bevorzugt wird dabei die Fehleranalyse an einem der in den vorstehend genannten Anmeldungen beschriebenen Geschwindigkeitserfassungssystemen durchgeführt, auf die explizit verwiesen wird. Generell ist jedoch die beanspruchte Fehleranalyse für jedes Geschwindigkeitserfassungssystem eines Zweirads geeignet, welches wenigstens einen Magneten in einem der drehbar gelagerten Räder aufweist. Dabei spielt es zunächst keine Rolle, ob die Geschwindigkeitserfassung die Drehgeschwindigkeit des Vorder- oder des Hinterrads erfasst. Weiterhin erfordert das Geschwindigkeitserfassungssystem zur Erfassung der Magnetfeldstärke des wenigstens einen Magneten einen ersten Magnetsensor, der direkt oder indirekt mit dem Rahmen des Zweirads gekoppelt ist. Die Kopplung kann dabei direkt durch das Anbringen an einem Rahmenteil erfolgen, z.B. in der Nähe der Tretkurbel oder der Hinterradaufhängung. Es ist jedoch auch möglich, den ersten Magnetsensor in dem Gehäuse einer Antriebseinheit bzw. eines Motors unterzubringen, welche(r) mechanisch starr mit dem Rahmen verbunden ist. Darüber hinaus kann der erste Magnetfeldsensor auch am Sattel, am Gepäckträger, am Lenker oder an einer Energieversorgungseinheit für den Motor befestigt sein. Wesentlich bei der Anordnung ist jedoch, dass eine ausreichende Nähe zum sich drehenden Magneten in dem überwachten Rad vorliegt, um eine ausreichende Empfindlichkeit der Erfassung des Magnetfeldsensorsignals zumindest bei der Annäherung zu ermöglichen. Weiterhin ist notwendig, dass für die Fehleranalyse der Ort der Anbringung des ersten Magnetfeldsensors bekannt ist. Für das Geschwindigkeitserfassungssystem ist darüber hinaus eine Auswerteeinheit notwendig, die ausgehend von den erfassten Magnetfeldsensorsignalen bzw. der erfassten zeitlich sich ändernden Magnetfeldstärken am Ort des Magnetfeldsensors zumindest eine Geschwindigkeitsinformation ermittelt und ausgibt. Diese Auswerteeinheit kann darüber hinaus ebenfalls den Abstand zwischen Magneten und erstem Magnetsensor, die Verdrehung des Hinterrads in Bezug auf den Rahmen sowie einen Höhen- und/oder Seitenschlag des Hinterrads 130, einen falschen Radeinbau des Hinterrads 130 sowie eine Lenkbewegung des Vorderrads 160 erkennen und ausgeben.

Zur Fehleranalyse wird die Seitenansicht des Zweirads erfasst. Hierzu wird beispielsweise mit einer Kamera in einer Analyseeinheit oder in einem Smartphone ein Bild der Seite des Zweirads aufgenommen.

Basierend auf den Bilddaten wird ein Abstand zwischen Magneten und erstem Magnetsensor ermittelt. Bei dieser Ermittlung kann vorgesehen sein, dass der Anbringungsort des ersten Magnetsensors fest vorgegeben ist und den Bilddaten zugeordnet werden kann. Alternativ kann jedoch auch vorgesehen sein, dass der Anbringungsort des ersten Magnetsensors in Abhängigkeit von weiteren Daten, wie beispielsweise einer Datenbank oder mittels einer (drahtlose) Übersendung entsprechender Informationen von der Auswerteeinheit oder einem anderen Steuergerät des Zweirads festgelegt wird.

So kann beispielsweise in der Auswerteeinheit des Geschwindigkeitserfassungssystems der genaue Anbringungsort hinterlegt sein, um daraus den Abstand zum Rad ableiten zu können. Unter Berücksichtigung der Anordnung des Magneten im Rad, z.B. an der Felge oder im Mantel, kann so ein minimaler Abstand ermittelt werden, der zwischen dem Magneten und erstem Magnetsensor vorliegt, wenn sich der Magnet in nächster Nähe zum Magnetsensor befindet. Ist dieser Abstand zu groß, kann der erste Magnetsensor bei einer anzunehmenden Magnetfeldstärke des Magneten kein aussagekräftiges Magnetfeldsensorsignal erfassen. Daher wird geprüft, ob der so ermittelte Abstand einen ersten Schwellenwert übersteigt, der die Verwendung der erfassten Magnetfeldsensorsignale zur Auswertung noch zulässt. Liegt der aus den Bilddaten ermittelte Abstand über dem Schwellenwert, ist davon auszugehen, dass keine erfolgreiche Auswertung der Magnetfeldsensorsignale möglich ist, weswegen eine erste Fehlermeldung erzeugt wird. Diese erste Fehlermeldung kann dem Fahrer anzeigen, dass er beispielsweise den ersten Magnetfeldsensor an einer Stelle am Rahmen bzw. am Zweirad anbringen muss, die sich näher zum bewegenden Rad befindet.

In einer weiteren Ausgestaltung der Erfindung ist vorgesehen, dass aus den Bilddaten der Seitenansicht ein Verdrehungswinkel des wenigstens einen überwachten Rades zum Rahmen abgeleitet wird. Bei Mountainbikes, bei denen das Hinterrad gesondert gefedert ist, kann eine fehlerhafte Einstellung des Stoßdämpfers am Hinterrad dazu führen, dass nur eine eingeschränkte Bewegung und somit Federung bei unebener Fahrbahn möglich ist. Durch die Erkennung eines Verdrehungswinkels oberhalb eines zweiten Schwellenwerts kann so der Fahrer über die Erzeugung einer zweiten Fehlermeldung über die Notwendigkeit einer Nachjustierung informiert werden. Üblicherweise wird dabei der Verdrehungswinkel in Relation zu einer ebenen Fahrbahn und/oder zur Hochachse bestimmt.

Alternativ kann auch der Verdrehungswinkel der Antriebseinheit zum Rahmen aus den Bilddaten abgeleitet werden. Liegt dieser Winkel nicht innerhalb einer vorgegebenen Toleranz, zum Beispiel unterhalb eines hierfür gewählten Schwellenwerts, kann die zweite Fehlermeldung den Fahrer auf eine Nachjustierung der Antriebseinheit aufmerksam machen. So kann beispielsweise bei einem bekannten Anbringungsort des ersten Magnetsensors in der Antriebseinheit bei einer zu großen Verdrehung der Abstand zum Magneten im überwachten Rad zu groß werden, so dass keine auswertefähigen Magnetfeldsensorsignale erfasst werden können. Eine Nachjustierung am Rad würde in diesem Fall nicht helfen, um die Erfassung zu ermöglichen.

Mittels einer Weiterbildung der Erfindung kann überprüft werden, ob der wenigstens eine Magnet noch im Rad vorhanden ist oder seine Magnetkraft zu gering ist, um aussagekräftige und auswertbare Magnetfeldsensorsignale zu erzeugen. Hierzu wird ein zweiter Magnetfeldsensor, z.B. ein an die Analyseeinheit angeschlossener oder in diesen integrierter Magnetfeldsensor, möglichst nahe an den Mantel des überwachten Rades gebracht. Anschließend wird das überwachte Rad in Drehung versetzt. Ist unbekannt, an welcher Stelle sich der Magnet befinden soll, ist zu empfehlen, dass zumindest eine vollständige Umdrehung des Rades durchgeführt wird, um sicherzustellen, dass der Magnet an dem zweiten Magnetfeldsensor vorbei gedreht wird, um Magnetfeldsensorsignale zu erzeugen. Auch bei mehreren Magneten im Rad sollte im Wesentlichen eine volle Umdrehung durchgeführt werden, um Unterschiede in der Magnetkraft der einzelnen Magnete oder sogar das Fehlen eines Magneten zu erkennen. Wird bei dieser Erfassung der Magnetfeldstärke bzw. der zugehörigen Magnetfeldsensorsignale erkannt, dass die Signale unterhalb eines dritten Schwellenwerts liegen, kann daraus geschlossen werden, dass der entsprechende Magnet fehlt, wenn der dritte Schwellenwert sehr niedrig gewählt wird. In diesem Fall wird eine dritte Fehlermeldung erzeugt, so dass der Fahrer zumindest den einen Magneten ersetzen kann.

Die so erzeugte Erfassung der Magnetfeldstärke über eine Umdrehung des überwachten Rades kann auch dazu genutzt werden, die Magnetfeldstärke des Magneten zu überprüfen. Hierzu wird geprüft, ob die erfassten Magnetfeldsensorsignale in ihrer Stärke zwischen dem dritten Schwellenwert und einem höheren vierten Schwellenwert liegen. Dieser vierte Schwellenwert stellt eine ausreichende Magnetfeldstärke dar, mit der im ersten Magnetfeldsensor eine aussagekräftige Auswertung möglich ist. Falls die Magnetfeldstärke den vierten Schwellenwert nicht übersteigt, deutet das auf einen zu schwachen Magneten hin, der ersetzt werden muss. Hierzu ist eine vierte Fehlermeldung vorgesehen, die optional mit einem Hinweis auf geeignete Magnete für dieses Geschwindigkeitserfassungssystem bzw. den verwendeten ersten Magnetfeldsensor aus einer Datenbank oder mit einem Link auf eine Bestellmöglichkeit im Internet verknüpft ist.

Die Erkennung eines zu schwachen Magneten kann zusätzlich durch die Hinzunahme der Information über den Abstand konkretisiert werden. So kann sichergestellt werden, dass der geeignete Magnet für den vorliegenden Abstand im Rad vorliegt oder ausgewählt wird. Hierzu wird eine fünfte Fehlermeldung erzeugt, um den Fahrer über einen notwendigen Austausch zu informieren.

Generell kann vorgesehen sein, dass auch die Form der Magnetfeldsensorsignale überprüft werden, die sich aus der Erfassung mittels des zweiten Magnetfeldsensors ergeben. Hierdurch kann beispielsweise erkannt werden, ob ein Magnet verrutscht oder gebrochen ist, wenn die Magnetfeldsensorsignale nicht den für den hinterlegten Typ des Magneten typischen zeitlichen Verlauf während der Drehung zeigen.

Liegt vom Geschwindigkeitserfassungssystem oder von dessen Auswerteinheit eine Fehlermeldung vor und wird keiner der zuvor erwähnten Fehlermeldungen erzeugt, kann darauf geschlossen werden, dass der erste Magnetfeldsensor nicht ordnungsgemäß funktioniert. In diesem Fall wird eine sechste Fehlermeldung erzeugt.

Besonders vorteilhaft ist das erfindungsgemäße Verfahren zur Fehleranalyse, wenn ein Datenaustausch zwischen Geschwindigkeitserfassungssystem oder dessen Auswerteinheit mit der Analyseeinheit möglich ist. Hierzu können beispielsweise Parameter oder Daten des Geschwindigkeitserfassungssystems und/oder des Zweirads an die Analyseeinheit weitergegeben werden, um die Fehleranalyse zu präzisieren. Neben dem vorstehend erwähnten Anbringungsort des ersten Magnetfeldsensors können auch der Radstand, Reifengröße oder sonstige Größen zur Verfügung gestellt werden, die eine genauere Auswertung der Bilddaten ermöglichen. Weiterhin können Information über die Anzahl der Magnete, den Typ der verwendeten Magnete und des verwendeten ersten Magnetfeldsensors übertragen werden, um die erfassten Magnetfeldsensorsignale des zweiten Magnetfeldsensors besser einschätzen zu können. Denkbar ist auch, dass einzelne oder alle Schwellenwerte in Abhängigkeit dieser übertragenen Daten und Parameter festgelegt oder variiert werden.

Optional kann vorgesehen sein, dass das Ergebnis der Fehleranalyse zu weiteren Informations- und/oder Auswertezwecken von der Analyseeinheit an das Geschwindigkeitserfassungssystem, dessen Auswerteeinheit oder einem anderen Steuergerät zurück übertragen wird.

Das vorstehende Verfahren kann im Rahmen eines Computerprogramms auch auf einem Smartphone eingesetzt werden. Dies hat den Vorteil, dass eine bereits im Smartphone vorhandene Kamera verwendet werden kann, um die Seitenansicht aufzunehmen. Ebenso kann ein im Smartphone integrierter Magnetfeldsensor verwendet werden.

Weitere Vorteile ergeben sich aus der nachfolgenden Beschreibung von Ausführungsbeispielen bzw. aus den abhängigen Patentansprüchen.

### Kurze Beschreibung der Zeichnungen

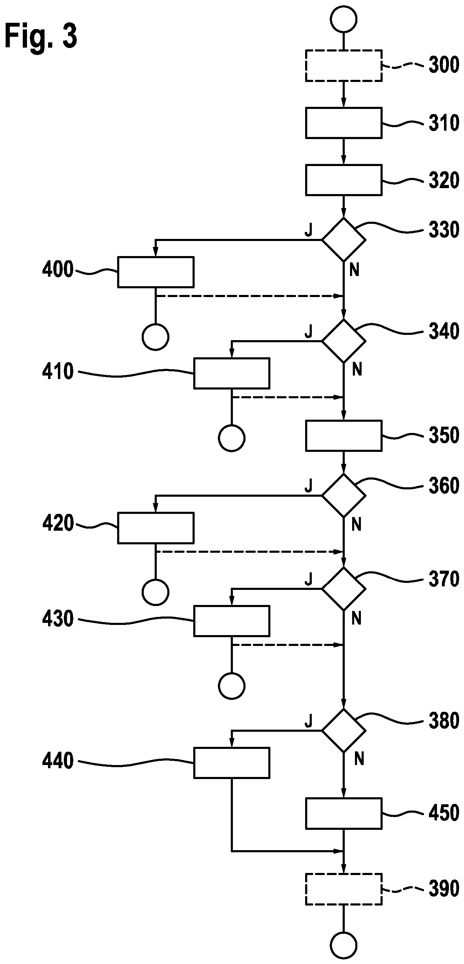

Figur 1 zeigt ein Zweirad, an dem die Erfindung eingesetzt werden kann. Mit der Figur 2 wird schematisch eine Vorrichtung dargestellt, die als Analyseeinheit für die Fehleranalyse verwendet werden kann. In der Figur 3 ist beispielhaft eine mögliche Realisierung der Erfindung in einem Flussdiagramm dargestellt.

### Ausführung der Erfindung

Die Vorrichtung zur Umsetzung des Verfahrens zur Fehleranalyse ist in Figur 2 in Form eines Blockschaltbilds dargestellt. Hierbei kann es sich um eine Analyseeinheit 200 mit einem Speicher 210 handeln. In diesem Speicher 210 können Informationen zur Erkennung des Anbringungsorts des ersten Magnetfeldsensoren am Zweirad aus Bilddaten abgespeichert sein. Weiterhin kann in dem Speicher 210 eine Datenbank vorgesehen sein, die sowohl die Typen verschiedener verwendbarer Magnete und Magnetfeldsensoren und deren Eigenschaften aufweist. Der Analyseeinheit 200 ist eine Kamera 220 zugeordnet, die separat aber auch in der Analyseeinheit 200 integriert sein kann. Weiterhin kann ein zweiter Magnetfeldsensor 230 vorgesehen sein, der ebenfalls separat oder in der Analyseeinheit 200 integriert sein kann. Optional kann vorgesehen sein, dass die Auswerteeinheit 240 oder eine andere Verarbeitungseinheit am Zweirad für die Fehleranalyse verwendbare Parameter und Informationen an die Analyseeinheit 200 versendet. Hier kann auch eine Initiierung der Fehleranalyse durch die Auswerteeinheit 240 oder die Verarbeitungseinheit eingeschlossen sein. Die Übertragung kann dabei kabelgebunden oder drahtlos erfolgen. Wird ein Fehler erkannt und eine Fehlermeldung erzeugt, kann diese auf einer Anzeige 250 dem Fahrer mitgeteilt werden, gegebenenfalls mit weiteren Informationen zur Fehlerbehebung. Auch diese Anzeige 250 kann separat oder in die Analyseeinheit 200 integriert sein. Das Ergebnis der Fehleranalyse, der erkannte Fehler bzw. die konkrete Fehlermeldung kann auch an die Auswerteeinheit 240 oder eine sonstige Verarbeitungseinheit am Zweirad, zum Beispiel einem Human-Machine-Interface (Mensch-Maschine-Schnittstelle oder HMI) weitergeleitet werden. Diese Weiterleitung kann ebenfalls kabelgebunden oder drahtlos erfolgen.

Wie bereits ausgeführt, kann die Fehleranalyse auch im Rahmen einer App auf einem Smartphone durchgeführt werden. Da bei den gängigen Smartphones sowohl eine Kamera als auch ein Magnetfeldsensor vorhanden ist, ist die Fehleranalyse und somit auch die Handhabung der vorliegenden Erfindung einfach für den Fahrer eines Zweirads ohne zusätzliche Gerätschaften nutzbar. Für Servicezwecke im Rahmen einer Werkstattwartung bietet es sich jedoch an, die Analyseeinheit 200 mit anderen Wartungstools zu kombinieren.

Das Verfahren zur Fehleranalyse eines Geschwindigkeitserfassungssystems an einem Zweirad 100 wird im nachfolgenden anhand des Flussdiagramms der Figur 3 ausgeführt. Nach dem Start des Verfahrens oder nach Initiierung durch die Auswerteinheit 240 bei der Erkennung eines Fehlers werden in einem optionalen Schritt 300 die für die Fehleranalyse relevanten Daten und Parameter von der Auswerteeinheit oder von einer anderen geeigneten Verarbeitungseinheit eingelesen. Anschließend wird im Schritt 310 ein Bild von der Seiten des Fahrzeugs bzw. des Zweirads aufgenommen. Dabei ist darauf zu achten, dass das Fahrzeug möglichst aufrecht steht und das Bild senkrecht zur Seitenfläche aufgenommen wird, um Verzerrungen zu vermeiden und somit die Auswertung zu erleichtern. Anschließend werden im Schritt 320 die Bilddaten ausgewertet und der Abstand zwischen dem Hinterrad und/oder dem Vorderrad zum ersten Magnetfeldsensor ermittelt. Hierbei kann entweder der Anbringungsort des ersten Magnetfeldsensors direkt aus den Bilddaten entnommen oder mittels abgespeicherter oder eingelesener Informationen abgeleitet werden. Wird im nächsten Schritt 330 erkannt, dass der Abstand größer als ein ersten Schwellenwert SW1 ist, so wird in einem Schritt 400 eine erste Fehlermeldung erzeugt. Andernfalls wird mit Schritt 340 weiter verfahren. Diese erste Fehlermeldung zeigt dem Fahrer an, dass der Abstand zwischen Magnet und erstem Magnetfeldsensor zu groß für eine sinnvolle Auswertung der Magnetfeldsensorsignale ist. Im Extremfall ist der Abstand sogar so groß, dass der erste Magnetfeldsensor keine Sensorsignale des Magnete erfassen kann. Anschließend kann das Verfahren beendet werden oder mit dem nächsten Schritt 340 weiter betrieben werden.

Bei dem Vergleich des Schritts 340 wird aus den Bilddaten der Verdrehungswinkel zwischen dem Hinterrad und dem Rahmen abgeleitet. Ist dieser Verdrehungswinkel größer als ein zweiter Schwellenwert SW2 deutet das auf eine fehlerhafte oder ungünstige Hinterradaufhängung hin, woraufhin eine zweite Fehlermeldung im Schritt 410 erzeugt wird. Andernfalls wird mit Schritt 350 weiter verfahren. Die Erzeugung der zweiten Fehlermeldung im Schritt 420 kann auch bei einer alternativen Prüfung im Schritt 340 ausgelöst werden. Hierbei wird der Verdrehungswinkel einer Antriebseinheit bzw. eines Motors 110 am Zweirad in Bezug auf den Rahmen 180 aus den Bilddaten abgeleitet und mit dem zweiten Schwellenwert SW2 verglichen. Die zweite Fehlermeldung zeigt dann eine zu große Verdrehung der Antriebseinheit bzw. des Motors 110 an, so dass ein in ihm befindlicher erster Magnetsensor 120 evtl. zu weit von dem im Rad befindlichen Magneten angeordnet ist. In diesem Fall wäre die Erfassung von Magnetfeldsensorsignalen durch den ersten Magnetfeldsensor 120 nicht möglich, unabhängig von der Aufhängung z.B. des Hinterrads. Nach der Erzeugung der zweiten Fehlermeldung in Schritt 410 kann das Verfahren beendet oder alternativ mit Schritt 350 weiter betrieben werden, um gegebenenfalls weitere Fehler zu erkennen.

Im Schritt 350 wird das Magnetfeld des wenigstens einen überwachten Rades mit einem zweiten Magnetfeldsensor 230 erfasst. Hierzu wird der zweite Magnetfeldsensor 230 an das Rad bzw. den Mantel des Rades gehalten, um einen möglichst geringen Abstand zu dem darin befindlichen Magneten zu erreichen. Anschließend wird das Rad gedreht, um im zweiten Magnetfeldsensor 230 ein Messsignal durch den Magneten im Rad zu erzeugen. Hierbei sollte wenigstens eine vollständige Umdrehung des Rades durchgeführt werden um sicherzustellen, dass der Magnet auch am zweiten Magnetfeldsensor vorbei geführt wird. Bei Kenntnis des Anbringungsortes des Magneten oder bei mehreren Magneten reicht unter Umständen auch eine teilweise Drehung des Rades aus, wobei auch in diesem Fall eine im Wesentlichen vollständige Umdrehung sinnvoll wäre. Optional können auch mehrere Drehungen durchgeführt werden, um über eine Mittelung der Magnetfeldsensorsignal eine genauere Bestimmung zu erreichen. Basierend auf diesen Magnetfeldsensorsignalen des zweiten Magnetfeldsensors 230 bei einer gezielten Drehung des Rades kann im nächsten Vergleichsschritt 360 überprüft werden, ob überhaupt ein Magnetfeld erkannt worden ist. Hierzu werden die Messergebnisse des zweiten Magnetfeldsensors 230 mit einem dritten Schwellenwert SW3 verglichen. Dieser dritte Schwellenwert SW3 ist bewusst gering gewählt, um überhaupt das Vorhandensein eines Magneten mit einem Magnetfeld zu detektieren. Typischerweise liegt dieser dritte Schwellenwert SW3 jedoch ausreichend über dem Wert Null, um zufällige Magnetfeldeinstreuungen während der Messung ausschließen zu können. Hierbei kann es auch von Vorteil sein, wenn mehrere Durchläufe des Rades gemittelt werden, um derartige Magnetfeldeinstreuungen zu minimieren. Zusätzlich kann vor der eigentlichen Messung eine Kalibrierung des zweiten Magnetfeldsensors durchgeführt werden, um konstante Einstreuungen, wie beispielsweise das Erdmagnetfeld, zu eliminieren. Hierzu wird der zweite Magnetfeldsensor ohne eine Annäherung an das Rad betrieben, um so die natürliche Magnetfeldeinstreuung zu erfassen. Diese natürliche Magnetfeldeinstreuung, die durchaus auch von in der Nähe befindlichen (permanenten) Magneten herrühren kann, kann dann vom erfassten Magnetfeldsensorsignal bei der Erfassung der Drehung abgezogen werden. Alternativ oder zusätzlich können auch die folgenden Schwellenwerte in Abhängigkeit dieser Magnetfeldeinstreuung angepasst oder gewählt werden. Wird erkannt, dass kein Magnetfeld erfasst worden ist, wird im Schritt 420 eine dritte Fehlermeldung erzeugt. Andernfalls wird das Verfahren mit einem weiteren Vergleichsschritt 370 weiter betrieben. Die dritte Fehlermeldung zeigt dem Fahrer des Fahrzeugs bzw. des Zweirads an, dass ein neuer Magnet in das Rad, z.B. die Felge oder den Mantel, eingebracht werden muss, um die Funktion der Geschwindigkeitserfassung wieder nutzen zu können. Anschließend kann das Verfahren beendet werden oder mit dem Schritt 370 weiter verfolgt werden, um weitere Fehler detektieren zu können.

Der nachfolgende Vergleichsschritt 370 überprüft, ob wenigstens einer der verwendeten Magnete ein zu schwaches Magnetfeld aufweist, um im ersten Magnetfeldsensor 120 ein auswertefähiges Magnetfeldsensorsignal zu erzeugen. Hierzu wird wieder auf die erfassten Magnetfeldsensorsignale des Schritts 350 zurück gegriffen und mit einem unteren Schwellenwert, z.B. dem dritten Schwellenwert SW3, und einem oberen vierten Schwellenwert SW4 verglichen. Der vierte Schwellenwert SW4 repräsentiert dabei eine Magnetfeldstärke, die ausreichend zur Erzeugung eines auswertefähigen Magnetfeldsensorsignals am Anbringungsort des ersten Magnetfeldsensors 120 ist. Liegt demnach das erfasste und gegebenenfalls gemittelte Magnetfeldsensorsignal zwischen den beiden Schwellenwerten SW3 und SW4 kann davon ausgegangen werden, dass der entsprechende Magnet nicht für die Geschwindigkeitserfassung geeignet ist und es folgt die Erzeugung einer vierten Fehlermeldung in Schritt 430. Andernfalls wird das Verfahren mit einem weiteren Vergleichsschritt 380 weiter betrieben. Das Vorliegen eines ungeeigneten Magneten kann beispielweise durch eine Entmagnetisierung oder einen Bruchs des zuvor geeigneten Magneten hervorgerufen werden. Über eine gezielte Bewegung des Rads über einen Teil des Umfangs und der Durchführung der Schritte 350 bis 370 bzw. 430 lässt sich beispielsweise bei mehreren Magneten im Rad auch der einzelne ungeeignete Magnet herausfinden.

Im nächsten Vergleichsschritt 380, der zusätzlich oder alternativ zum Schritt 370 durchgeführt werden kann, wird lediglich das Überschreiten des vierten Schwellenwerts SW4 durch das Messwertsignal des zweiten Magnetfeldsensors 230 überprüft. Darüber hinaus wird aber ebenfalls der Abstand zwischen dem ersten Magnetsensor 120 und dem Magneten 140 in seiner geringsten Entfernung herangezogen, wie er im Schritt 320 ermittelt worden ist. Durch diese Berücksichtigung kann erkannt werden, ob die Magnetfeldstärke des Magneten direkt im Rad bzw. Mantel ausreichend ist, um ein auswertefähiges Magnetfeldsensorsignal im ersten Magnetfeldsensor 120 zu erzeugen. Optional kann der vierte Schwellenwert SW4 auch in Abhängigkeit des ermittelten Abstands festgelegt oder variiert werden. Wird erkannt, dass die Magnetfeldstärke des Magneten oder wenigstens einem der verwendeten Magnete nicht ausreichend stark ist, wird im Schritt 440 eine fünfte Fehlermeldung erzeugt und das Verfahren mit einem optionalen Schritt 390 weiter verfolgt. Andernfalls wird das Verfahren mit einem weiteren Schritt 450 weiter betrieben.

Nachdem in den vorherigen Schritten mögliche Fehler bei der Anbringung des Magneten sowie des ersten Magnetsensors überprüft worden sind, wird im nachfolgenden Schritt 450 mit einer sechsten Fehlermeldung darauf hingewiesen, dass bei Vorlage keiner anderen Fehlermeldung ein Defekt des ersten Magnetfeldsensors 120 vorliegen muss. Der Fahrer wird dabei darüber informiert, dass der erste Magnetfeldsensor 120 gegebenenfalls mit einem weiteren Wartungstool überprüft und bei Bedarf ausgetauscht werden muss. Die Erzeugung der sechsten Fehlermeldung kann weiterhin davon abhängig gemacht werden, inwieweit auch der zweite Magnetfeldsensor 230 korrekt arbeitet. Hier könnte vor der Erzeugung der sechsten Fehlermeldung ein Abfrageschritt eingeführt werden, der prüft, ob der zweite Magnetfeldsensor 230 ohne das Anlegen an das überwachte Rad das Erdmagnetfeld und somit überhaupt ein Messsignal bzw. eine Messgröße erzeugt. Wird das Erdmagnetfeld nicht gemessen bzw. kein Messsignal erzeugt, welches dem Erdmagnetfeld entspricht, so kann keine Aussage über die Funktionsfähigkeit des ersten Magnetfeldsensors 120 getroffen werden. Die sechste Fehlermeldung wird daher nicht erzeugt. Stattdessen kann eine siebte Fehlermeldung erzeugt werden, die einen Fehler im zweiten Magnetfeldsensor 230 anzeigt.

Im letzten optionalen Schritt 390 können die Erkenntnisse der Fehleranalyse, insbesondere die erzeugten Fehlermeldungen, an das Geschwindigkeitserfassungssystem, dessen Auswerteeinheit 240 oder jede andere Verarbeitungseinheit 260 übertragen werden. Die so mittels Kabel oder drahtlos übertragenen Informationen können auf einem Anzeigegerät des Fahrzeugs, z.B. einem HMI 150, für den Fahrer angezeigt werden. Optional kann auch vorgesehen sein, dass die Steuerung der Antriebseinheit am Fahrzeug auf die erkannte Fehlermeldung reagiert, indem beispielsweise bei Bedarf auf eine alternative Geschwindigkeitsmessung umgeschaltet wird, um eine verlässliche Basis für die Ansteuerung der Antriebseinheit zu haben. Dies ist besonders im Falle eines Elektrofahrrads sinnvoll. Bei einigen Fehlermeldungen kann jedoch auch berücksichtigt werden, ob lediglich einer von mehreren Magneten am Rad nicht zur Messung herangezogen werden kann. Hier ist dann das Verfahren zur Geschwindigkeitserfassung in Abhängigkeit von den Messsignalen des ersten Magnetfeldsensors entsprechend anzupassen.

Wie bereits ausgeführt, kann das erfindungsgemäße Verfahren zur Fehleranalyse im Rahmen eines Wartungstools realisiert werden, welches auf einem speziellen Werkstattgeräten, auf Smartphones, Tablets oder einem PC ablaufen kann. Hier kann bei jeder der aufgeführten Fehlermeldungen oder auch nur bei einem Teil davon für den Anwender, z.B. des Fahrer des Zweirads eine geführte Reparaturanleitung angezeigt werden. So kann beispielsweise der Einbau bzw. Austausch eines Magneten oder eines ersten Magnetsensors verbal oder visualisiert mittels Texten, Bildern oder Videos dargestellt werden. Auch die nach dem Einbau bzw. Austausch gegebenenfalls erforderliche Neukalibrierung und die damit verbundenen Eingaben und Aktivierungen im HMI des Zweirads kann angezeigt werden.

## Patentansprüche

1. Verfahren zur Fehleranalyse eines Geschwindigkeitserfassungssystems an einem Zweirad (100),
wobei das Geschwindigkeitserfassungssystem
• wenigstens einen an einem drehbar gelagerten Rad (130, 160) montierten Magneten (140, 170), und
• eine direkt oder indirekt an den Rahmen (180) des Fahrzeugs gekoppelte ersten Magnetfeldsensoreinheit (120) zur Erfassung der Magnetfeldstärke des Magneten (140, 170), und
• eine Auswerteeinheit (150, 240) zur Ausgabe einer Geschwindigkeitsinformation in Abhängigkeit der erfassten Magnetfeldstärke
aufweist,
wobei zur Fehleranalyse
• ein Bild der Seitenansicht des Zweirads (100) erfasst wird, und
• ein Abstand zwischen dem wenigstens einen Rad (130, 160) und der ersten Magnetfeldsensoreinheit (120) in der Bildebene der Seitenansicht aus den Bilddaten der Seitenansicht ermittelt wird, und
• eine erste Fehlermeldung (400) erzeugt wird, wenn der Abstand einen ersten Schwellenwert (SW1) übersteigt.

2. Verfahren nach Anspruch 1, **dadurch gekennzeichnet, dass** der erste Schwellenwert (SW1) einen maximalen Erfassungsabstand zwischen einem vorbestimmten Magneten (140, 170) und der ersten Magnetfeldsensoreinheit (120) repräsentiert.

3. Verfahren nach einem der vorherigen Ansprüche, **dadurch gekennzeichnet, dass** zur Fehleranalyse
• ein Verdrehungswinkel zwischen dem gefederten Hinterrad (130) oder einer am Zweirad angebrachten Antriebseinheit (110) und dem Rahmen (180) aus den Daten der Seitenansicht ermittelt wird, wobei zur Ermittlung des Verdrehwinkels der Antriebseinheit (110) der Anbringungsort des ersten Magnetfeldsensors in der Antriebseinheit (100) vorgegeben und den Bilddaten zugeordnet ist, und
• eine zweite Fehlermeldung (410) erzeugt wird, wenn der Verdrehungswinkel einen zweiten Schwellenwert (SW2) übersteigt.

4. Verfahren nach einem der vorherigen Ansprüche, **dadurch gekennzeichnet, dass** zur Fehleranalyse
• mittels eines zweiten Magnetfeldsensors (230) die Magnetfeldstärke während einer im Wesentlichen vollständigen Umdrehung des wenigstens einen Rades erfasst wird, und
• eine dritte Fehlermeldung (420) erzeugt wird, wenn die Magnetfeldstärke einen dritten Schwellenwert (SW3) nicht übersteigt, wobei vorgesehen ist, dass bei der Erfassung der Magnetfeldstärke der zweite Magnetfeldsensor (230) in einen geringen Abstand zum Rad oder zum Mantel des Rades gebracht wird.

5. Verfahren nach Anspruch 4, **dadurch gekennzeichnet, dass** vor der Erfassung der Magnetfeldstärke während einer im Wesentlichen vollständigen Umdrehung des wenigstens einen Rades ein Kalibrierungsschritt vorgesehen ist, bei dem
• mittels des zweiten Magnetfeldsensors (230) die statische Magnetfeldstärke der Umgebung ohne eine Umdrehung des zu überprüfenden Rades erfasst wird, und
• der dritte Schwellenwert (SW3) in Abhängigkeit von der statischen Magnetfeldstärke der Umgebung gewählt wird.

6. Verfahren nach Anspruch 4 oder 5, **dadurch gekennzeichnet, dass** die dritte Fehlermeldung (420) erzeugt wird, wenn zusätzlich die erfassten Magnetfeldsensordaten während einer Umdrehung des Rades (130, 160) keinen für den am oder in dem Rad (130, 160) befindlichen wenigstens einen Magneten (140, 170) typischen zeitlichen Verlauf der Magnetfeldstärke während der Drehung zeigen.

7. Verfahren nach einem der vorherigen Ansprüche, **dadurch gekennzeichnet, dass** zur Fehleranalyse
• mittels eines zweiten Magnetfeldsensors (230) die Magnetfeldstärke während einer im Wesentlichen vollständigen Umdrehung des wenigstens einen Rades (130, 160) erfasst wird, und
• eine vierte Fehlermeldung (430) erzeugt wird, wenn die Magnetfeldstärke zwischen einem dritten Schwellenwert (SW3) und einem vierten Schwellenwert (SW4) liegt,
wobei insbesondere vorgesehen ist, dass der vierte Schwellenwert (SW4) größer als der dritte Schwellenwert (SW3) ist.

8. Verfahren nach Anspruch 7, **dadurch gekennzeichnet, dass**
• eine fünfte Fehlermeldung (440) erzeugt wird, wenn
o die Magnetfeldstärke zwischen dem dritten Schwellenwert (SW3) und dem vierten Schwellenwert (SW4) liegt, und
o der Abstand zwischen dem wenigstens einen Rad (130, 160) und der ersten Magnetfeldsensoreinheit (120) unterhalb eines fünften Schwellenwerts (SW5) liegt,
wobei insbesondere vorgesehen ist, dass in Abhängigkeit der erzeugten fünften Fehlermeldung (440) eine Information zum Austausch des wenigstens einen Magneten in dem Rad (130, 160) erzeugt wird.

9. Verfahren nach Anspruch 1, 3, 4 und 8, **dadurch gekennzeichnet, dass**
• eine sechste Fehlermeldung (450) erzeugt wird, wenn vom Geschwindigkeitserfassungssystem oder von dessen Auswerteeinheit eine Fehlermeldung vorliegt und keine der anderen Fehlermeldungen erzeugt worden ist, wobei vorgesehen ist, dass die sechste Fehlermeldung (450) einen Defekt der ersten Magnetfeldsensoreinheit (120) repräsentiert.

10. Verfahren nach einem der vorherigen Ansprüche, **dadurch gekennzeichnet, dass**
• Parameter des Geschwindigkeitserfassungssystems und/oder des Zweirads (100) erfasst werden, und
• der erste, zweite, dritte, vierte und/oder fünfte Schwellenwert (SW1, SW2, SW3, SW4, SW5) in Abhängigkeit von den erfassten Parametern festgelegt werden,
wobei als Parameter des Geschwindigkeitserfassungssystems
∘ der Anbringungsort des ersten Magnetfeldsensors, und/oder
∘ der Radstand, und/oder
∘ die Reifengröße, und/oder
∘ die Anzahl der Magnete, und/oder
∘ der Typ der verwendeten Magnete und des verwendeten ersten Magnetfeldsensors,
erfasst werden,
wobei insbesondere vorgesehen ist, dass wenigstens einer der Schwellenwerte (SW1, SW2, SW3, SW4, SW5) vom Geschwindigkeitserfassungssystem, der Auswerteeinheit (150, 240) und/oder von einem Steuergerät des Zweirads (100) mittels einer drahtlosen Übertragung übertragen wird.

11. Verfahren nach einem der vorherigen Ansprüche, **dadurch gekennzeichnet, dass**
• die erzeugte Fehlermeldung an das Geschwindigkeitserfassungssystem und/oder eine Verarbeitungseinheit (150, 260) übermittelt wird.

12. Computerprogramm zur Durchführung eines Verfahrens nach einem der vorherigen Ansprüche, wobei das Computerprogramm zur Fehleranalyse
• ein Bild der Seitenansicht des Zweirads (100) erfasst, und
• einen Abstand zwischen dem wenigstens einen Rad (130, 160) und der ersten Magnetfeldsensoreinheit (120) in der Bildebene der Seitenansicht aus den Bilddaten der Seitenansicht ermittelt, und
• eine erste Fehlermeldung (400) erzeugt, wenn der Abstand einen ersten Schwellenwert (SW1) übersteigt.

13. Analyseeinheit zur Fehleranalyse eines Geschwindigkeitserfassungssystems an einem Zweirad (100),
wobei das Geschwindigkeitserfassungssystem
• wenigstens einen an einem drehbar gelagerten Rad (130, 160) montierten Magneten (140, 170), und
• eine direkt oder indirekt an den Rahmen (180) des Fahrzeugs gekoppelte ersten Magnetfeldsensoreinheit zur Erfassung der Magnetfeldstärke des Magneten (140, 170), und
• eine Auswerteeinheit (150, 240) zur Ausgabe einer Geschwindigkeitsinformation in Abhängigkeit der erfassten Magnetfeldstärke
aufweist,
wobei die Analyseeinheit
• eine Recheneinheit (200) zur Durchführung eines der Verfahren nach Anspruch 1 bis 11 oder eines Computerprogramms nach Anspruch 12, und
• eine optische Bilderfassung (220)
aufweist,
wobei die Recheneinheit (200) zur Fehleranalyse so ausgebildet ist, dass sie
• mittels der optischen Bilderfassung ein Bild der Seitenansicht des Zweirads (100) erfasst, und
• einen Abstand zwischen dem wenigstens einen Rad (130, 160) und der ersten Magnetfeldsensoreinheit (120) in der Bildebene der Seitenansicht aus den Bilddaten der Seitenansicht ermittelt, und
• eine erste Fehlermeldung (400) erzeugt, wenn der Abstand einen ersten Schwellenwert (SW1) übersteigt.

14. Analyseeinheit nach Anspruch 13, **dadurch gekennzeichnet, dass** die Analyseeinheit
• einen zweiten Magnetfeldsensor (230) aufweist,
wobei die Recheneinheit (200) zur Fehleranalyse so ausgebildet ist, dass sie
• mittels des zweiten Magnetfeldsensors (230) die Magnetfeldstärke während einer im Wesentlichen vollständigen Umdrehung des wenigstens einen Rades (130, 160) erfasst, und
• eine dritte Fehlermeldung (420) erzeugt, wenn die Magnetfeldstärke einen dritten Schwellenwert (SW3) nicht übersteigt,
wobei vorgesehen ist, dass bei der Erfassung der Magnetfeldstärke der zweite Magnetfeldsensor (230) einen minimalem Abstand zum Rad (130, 160) oder zum Mantel des Rades aufweist.

15. Analyseeinheit nach einem der Ansprüche 13 oder 14, **dadurch gekennzeichnet, dass** die Recheneinheit zur Fehleranalyse so ausgebildet ist, dass sie
• Parameter des Geschwindigkeitserfassungssystems und/oder des Zweirads von der Auswerteeinheit (150, 240) erfasst, insbesondere drahtlos, und
• den ersten, zweiten, dritten, vierten und/oder fünften Schwellenwert in Abhängigkeit von den erfassten Parametern festlegt,
wobei als Parameter des Geschwindigkeitserfassungssystem
∘ der Anbringungsort des ersten Magnetfeldsensors, und/oder
∘ der Radstand, und/oder
∘ die Reifengröße, und/oder
∘ die Anzahl der Magnete, und/oder
∘ den Typ der verwendeten Magnete und des verwendeten ersten Magnetfeldsensors,
erfasst werden,
wobei insbesondere vorgesehen ist, dass wenigstens einer der Schwellenwerte vom Geschwindigkeitserfassungssystem, der Auswerteeinheit (150, 240) und/oder von einem Steuergerät des Zweirads (100) mittels einer drahtlosen Übertragung übertragen wird.

16. Analyseeinheit nach einem der Ansprüche 13 bis 15, **dadurch gekennzeichnet, dass** die Recheneinheit (200) so ausgebildet ist, dass sie
• die erzeugte Fehlermeldung an das Geschwindigkeitserfassungssystem, die Auswerteinheit (150, 240) und/oder eine Verarbeitungseinheit (260) übermittelt, insbesondere drahtlos.

## Claims

1. Method for the error analysis of a speed-sensing system on a two-wheeled vehicle (100),
wherein the speed-sensing system has
• at least one magnet (140, 170), fitted on a rotatably mounted wheel (130, 160), and
• a first magnetic field sensor unit (120), coupled directly or indirectly to the frame (180) of the vehicle, for sensing the magnetic field strength of the magnet (140, 170), and
• an evaluation unit (150, 240) for the output of speed information in dependence on the sensed magnetic field strength,
wherein, for the error analysis,
• an image of the side view of the two-wheeled vehicle (100) is captured, and
• a distance between the at least one wheel (130, 160) and the first magnetic field sensor unit (120) in the image plane of the side view is determined from the image data of the side view, and
• a first error message (400) is generated if the distance exceeds a first threshold value (SW1).

2. Method according to Claim 1, **characterized in that** the first threshold value (SW1) represents a maximum sensing distance between a predetermined magnet (140, 170) and the first magnetic field sensor unit (120).

3. Method according to one of the preceding claims, **characterized in that**, for the error analysis,
• a torsion angle between the sprung rear wheel (130) or a drive unit (110) attached to the two-wheeled vehicle and the frame (180) is determined from the data of the side view, wherein, for determining the torsion angle of the drive unit (110), the attachment location of the first magnetic field sensor is prescribed in the drive unit (100) and assigned to the image data, and
• a second error message (410) is generated if the torsion angle exceeds a second threshold value (SW2) .

4. Method according to one of the preceding claims, **characterized in that**, for the error analysis,
• the magnetic field strength during a substantially complete revolution of the at least one wheel is sensed by means of a second magnetic field sensor (230), and
• a third error message (420) is generated if the magnetic field strength does not exceed a third threshold value (SW3),
wherein it is provided that, when sensing the magnetic field strength, the second magnetic field sensor (230) is brought to a small distance from the wheel or from the casing of the wheel.

5. Method according to Claim 4, **characterized in that**, before the sensing of the magnetic field strength during a substantially complete revolution of the at least one wheel, a calibrating step is provided, in which
• the static magnetic field strength of the surroundings without a revolution of the wheel to be checked is sensed by means of the second magnetic field sensor (230), and
• the third threshold value (SW£) is chosen in dependence on the static magnetic field strength of the surroundings.

6. Method according to Claim 4 or 5, **characterized in that** the third error message (420) is generated if, in addition, the sensed magnetic field sensor data during a revolution of the wheel (130, 160) do not show a typical progression over time of the magnetic field strength during the rotation for the at least one magnet (140, 170) located on or in the wheel (130, 160) .

7. Method according to one of the preceding claims, **characterized in that**, for the error analysis,
• the magnetic field strength during a substantially complete revolution of the at least one wheel (130, 160) is sensed by means of a second magnetic field sensor (230), and
• a fourth error message (430) is generated if the magnetic field strength lies between a third threshold value (SW3) and a fourth threshold value (SW4),
wherein it is provided in particular that the fourth threshold value (SW4) is greater than the third threshold value (SW3).

8. Method according to Claim 7, **characterized in that**
• a fifth error message (440) is generated if
o the magnetic field strength lies between the third threshold value (SW3) and the fourth threshold value (SW4), and
o the distance between the at least one wheel (130, 160) and the first magnetic field sensor unit (120) lies below a fifth threshold value (SW5),
wherein it is provided in particular that information with respect to the exchange of the at least one magnet in the wheel (130, 160) is generated in dependence on the generated fifth error message (440) .

9. Method according to Claims 1, 3, 4 and 8, **characterized in that**
• a sixth error message (450) is generated if there is an error message from the speed-sensing system or from its evaluation unit and none of the other error messages has been generated, wherein it is provided that the sixth error message (450) represents a defect of the first magnetic field sensor unit (120).

10. Method according to one of the preceding claims, **characterized in that**
• parameters of the speed-sensing system and/or of the two-wheeled vehicle (100) are sensed, and
• the first, second, third, fourth and/or fifth threshold values (SW1, SW2, SW3, SW4, SW5) are fixed in dependence on the sensed parameters,
wherein
o the attachment location of the first magnetic field sensor, and/or
o the wheelbase, and/or
o the tyre size, and/or
o the number of magnets, and/or
o the type of magnets used and type of first
magnetic field sensor used
are sensed as parameters of the speed-sensing system, wherein it is provided in particular that at least one of the threshold values (SW1, SW2, SW3, SW4, SW5) is transmitted from the speed-sensing system, the evaluation unit (150, 240) and/or from a control device of the two-wheeled vehicle (100) by means of a wireless transmission.

11. Method according to one of the preceding claims, **characterized in that**
• the generated error message is transmitted to the speed-sensing system and/or a processing unit (150, 260) .

12. Computer program for carrying out a method according to one of the preceding claims, wherein, for the error analysis, the computer program
• captures an image of the side view of the two-wheeled vehicle (100), and
• determines a distance between the at least one wheel (130, 160) and the first magnetic field sensor unit (120) in the image plane of the side view from the image data of the side view, and
• generates a first error message (400) if the distance exceeds a first threshold value (SW1).

13. Analysis unit for the error analysis of a speed-sensing system on a two-wheeled vehicle (100), wherein the speed-sensing system has
• at least one magnet (140, 170), fitted on a rotatably mounted wheel (130, 160), and
• a first magnetic field sensor unit, coupled directly or indirectly to the frame (180) of the vehicle, for sensing the magnetic field strength of the magnet (140, 170), and
• an evaluation unit (150, 240) for the output of speed information in dependence on the sensed magnetic field strength,
wherein the analysis unit has
• a computing unit (200) for carrying out one of the methods according to Claims 1 to 11 or a computer program according to Claim 12, and
• an optical image capturing device (220),
wherein, for the error analysis, the computing unit (200) is formed in such a way that it
• captures an image of the side view of the two-wheeled vehicle (100) by means of the optical image capturing device, and
• determines a distance between the at least one wheel (130, 160) and the first magnetic field sensor unit (120) in the image plane of the side view from the image data of the side view, and
• generates a first error message (400) if the distance exceeds a first threshold value (SW1).

14. Analysis unit according to Claim 13, **characterized in that** the analysis unit
• has a second magnetic field sensor (230),
wherein, for the error analysis, the computing unit (200) is formed in such a way that it
• senses the magnetic field strength during a substantially complete revolution of the at least one wheel (130, 160) by means of the second magnetic field sensor (230), and
• generates a third error message (420) if the magnetic field strength does not exceed a third threshold value (SW3),
wherein it is provided that, when sensing the magnetic field strength, the second magnetic field sensor (230) is at a minimal distance from the wheel (130, 160) or from the casing of the wheel.

15. Analysis unit according to either of Claims 13 and 14, **characterized in that**, for the error analysis, the computing unit is formed in such a way that it
• senses parameters of the speed-sensing system and/or of the two-wheeled vehicle from the evaluation unit (150, 240), and
• fixes the first, second, third, fourth and/or fifth threshold value in dependence on the sensed parameters,
wherein
o the attachment location of the first magnetic field sensor, and/or
o the wheelbase, and/or
o the tyre size, and/or
o the number of magnets, and/or
o the type of magnets used and type of first
magnetic field sensor used
are sensed as parameters of the speed-sensing system, wherein it is provided in particular that at least one of the threshold values is transmitted from the speed-sensing system, the evaluation unit (150, 240) and/or from a control device of the two-wheeled vehicle (100) by means of a wireless transmission.

16. Analysis unit according to one of Claims 13 to 15, **characterized in that** the computing unit (200) is formed in such a way that it
• transmits the generated error message to the speed-sensing system, the evaluation unit (150, 240) and/or a processing unit (260), in particular wirelessly.

## Revendications

1. Procédé d'analyse d'erreur d'un système de détection de vitesse sur un deux-roues (100),
le système de détection de vitesse présentant
• au moins un aimant (140, 170) installé sur une roue montée en rotation (130, 160), et
• une première unité de capteur de champ magnétique (120) couplée directement ou indirectement au cadre (180) du véhicule pour détecter l'intensité de champ magnétique de l'aimant (140, 170), et
• une unité d'évaluation (150, 240) pour sortir une information de vitesse en fonction de l'intensité de champ magnétique détectée,
dans lequel, pour l'analyse d'erreur,
• une image de la vue latérale du deux-roues (100) est acquise, et
• une distance entre ladite au moins une roue (130, 160) et la première unité de capteur de champ magnétique (120) dans le plan image de la vue latérale est déterminée à partir des données d'image de la vue latérale, et
• un premier message d'erreur (400) est généré si la distance dépasse une première valeur seuil (SW1).

2. Procédé selon la revendication 1, **caractérisé en ce que** la première valeur seuil (SW1) représente une distance de détection maximale entre un aimant prédéterminé (140, 170) et la première unité de capteur de champ magnétique (120).

3. Procédé selon l'une quelconque des revendications précédentes, **caractérisé en ce que** pour l'analyse d'erreur
• un angle de torsion entre la roue arrière suspendue (130) ou une unité d'entraînement (110) placée sur le deux-roues et le cadre (180) est déterminé à partir des données de la vue latérale, l'emplacement du premier capteur de champ magnétique dans l'unité d'entraînement (100) étant prédéfini et associé aux données d'image pour la détermination de l'angle de torsion de l'unité d'entraînement (110), et
• un deuxième message d'erreur (410) est généré lorsque l'angle de torsion dépasse une deuxième valeur seuil (SW2).

4. Procédé selon l'une quelconque des revendications précédentes, **caractérisé en ce que** pour l'analyse d'erreur,
• un deuxième capteur de champ magnétique (230) détecte l'intensité de champ magnétique pendant un tour substantiellement complet de ladite au moins une roue, et
• un troisième message d'erreur (420) est généré lorsque l'intensité de champ magnétique ne dépasse pas une troisième valeur seuil (SW3), lors de la détection de l'intensité de champ magnétique, le deuxième capteur de champ magnétique (230) étant destiné à être amené à une faible distance par rapport à la roue ou au bandage de la roue.

5. Procédé selon la revendication 4, **caractérisé en ce qu'**avant la détection de l'intensité de champ magnétique, pendant un tour substantiellement complet de ladite au moins une roue, une étape d'étalonnage est prévue, dans laquelle
• le deuxième capteur de champ magnétique (230) détecte l'intensité de champ magnétique statique de l'environnement sans aucun tour de la roue à vérifier, et
• la troisième valeur seuil (SW3) est sélectionnée en fonction de l'intensité de champ magnétique statique de l'environnement.

6. Procédé selon la revendication 4 ou 5, **caractérisé en ce que** le troisième message d'erreur (420) est généré si en plus les données de capteur de champ magnétique détectées pendant un tour de la roue (130, 160) n'indiquent pendant la rotation aucune courbe temporelle de l'intensité de champ magnétique typique dudit au moins un aimant (140, 170) se trouvant sur ou dans la roue (130, 160).

7. Procédé selon l'une quelconque des revendications précédentes, **caractérisé en ce que** pour l'analyse d'erreur,
• un deuxième capteur de champ magnétique (230) détecte l'intensité de champ magnétique pendant un tour substantiellement complet de ladite au moins une roue (130, 160), et
• un quatrième message d'erreur (430) est généré si l'intensité de champ magnétique est située entre une troisième valeur seuil (SW3) et une quatrième valeur seuil (SW4),
la quatrième valeur seuil (SW4) étant en particulier destinée à être supérieure à la troisième valeur seuil (SW3).

8. Procédé selon la revendication 7, **caractérisé en ce que**
• un cinquième message d'erreur (440) est généré si
o l'intensité de champ magnétique se situe entre la troisième valeur seuil (SW3) et la quatrième valeur seuil (SW4), et
o la distance entre ladite au moins une roue (130, 160) et la première unité de capteur de champ magnétique (120) se situe au-dessous d'une cinquième valeur seuil (SW5),
une information pour le remplacement de l'au moins un aimant sur la roue (130, 160) étant en particulier destinée à être générée en fonction du cinquième message d'erreur (440) généré.

9. Procédé selon les revendications 1, 3, 4 et 8, **caractérisé en ce que**
• un sixième message d'erreur (450) est généré si un message d'erreur provenant du système de détection de vitesse ou de son unité d'évaluation est présent et aucun des autres messages d'erreur n'a été généré, le sixième message d'erreur (450) étant destiné à représenter un défaut de la première unité de capteur de champ magnétique (120).

10. Procédé selon l'une quelconque des revendications précédentes, **caractérisé en ce que**
• des paramètres du système de détection de vitesse et/ou du deux-roues (100) sont détectés, et
• la première, deuxième, troisième, quatrième et/ou cinquième valeur seuil (SW1, SW2, SW3, SW4, SW5) sont fixées en fonction des paramètres détectés,
dans lequel, comme paramètres du système de détection de vitesse,
o l'emplacement du premier capteur de champ magnétique, et/ou
o l'empattement, et/ou
o la dimension de pneu, et/ou
o le nombre des aimants, et/ou
o le type des aimants utilisés et du premier capteur de champ magnétique utilisé
sont détectés,
au moins l'une des valeurs seuil (SW1, SW2, SW3, SW4, SW5) du système de détection de vitesse, de l'unité d'évaluation (150, 240) et/ou d'un appareil de commande des deux-roues (100) étant prévue en particulier pour être transmise au moyen d'une transmission sans fil.

11. Procédé selon l'une quelconque des revendications précédentes, **caractérisé en ce que**
• le message d'erreur généré est transmis au système de détection de vitesse et/ou à une unité de traitement (150, 260).

12. Programme informatique permettant d'exécuter un procédé selon l'une quelconque des revendications précédentes, dans lequel le programme informatique, pour l'analyse d'erreur,
• acquiert une image de la vue latérale du deux-roues (100), et
• détermine une distance entre ladite au moins une roue (130, 160) et la première unité de capteur de champ magnétique (120) dans le plan d'image de la vue latérale à partir des données d'image de la vue latérale, et
• génère un premier message d'erreur (400) si la distance dépasse une première valeur seuil (SW1).

13. Unité d'analyse destinée à l'analyse d'erreur d'un système de détection de vitesse sur un deux-roues (100), le système de détection de vitesse présentant
• au moins un aimant (140, 170) installé sur une roue montée en rotation (130, 160), et
• une première unité de capteur de champ magnétique couplée directement ou indirectement au cadre (180) du véhicule pour détecter l'intensité de champ magnétique de l'aimant (140, 170), et
• une unité d'évaluation (150, 240) pour sortir une information de vitesse en fonction de l'intensité de champ magnétique détectée,
l'unité d'analyse présentant
• une unité de calcul (200) pour exécuter l'un des procédés selon les revendications 1 à 11 ou un programme informatique selon la revendication 12, et
• un dispositif d'acquisition d'image optique (220),
l'unité de calcul (200) destinée à l'analyse d'erreur étant réalisée de telle sorte qu'elle
• détecte une image de la vue latérale du deux-roues (100) au moyen du dispositif d'acquisition d'image optique, et
• détermine une distance entre ladite au moins une roue (130, 160) et la première unité de capteur de champ magnétique (120) dans le plan d'image de la vue latérale à partir des données d'image de la vue latérale, et
• génère un premier message d'erreur (400) si la distance dépasse une première valeur seuil (SW1).

14. Unité d'analyse selon la revendication 13, **caractérisée en ce que** l'unité d'analyse présente
• un deuxième capteur de champ magnétique (230),
l'unité de calcul (200) destinée à l'analyse d'erreur étant réalisée de telle sorte qu'elle
• détecte au moyen du deuxième capteur de champ magnétique (230) l'intensité de champ magnétique pendant un tour substantiellement complet de ladite au moins une roue (130, 160), et
• génère un troisième message d'erreur (420) si l'intensité de champ magnétique ne dépasse pas une troisième valeur seuil (SW3),
lors de la détection de l'intensité de champ magnétique, le deuxième capteur de champ magnétique (230) étant destiné à présenter une distance minimale par rapport à la roue (130, 160) ou au bandage de la roue.

15. Unité d'analyse selon l'une quelconque des revendications 13 ou 14, **caractérisée en ce que** l'unité de calcul destinée à l'analyse d'erreur est réalisée de telle sorte qu'elle
• détecte, en particulier sans fil, des paramètres du système de détection de vitesse et/ou du deux-roues provenant de l'unité d'évaluation (150, 240), et
• fixe la première, deuxième, troisième, quatrième et/ou cinquième valeur seuil en fonction des paramètres détectés,
dans lequel, comme paramètres du système de détection de vitesse,
o l'emplacement du premier capteur de champ magnétique, et/ou
o l'empattement, et/ou
o la dimension de pneu, et/ou
o le nombre des aimants, et/ou
o le type des aimants utilisés et du premier capteur de champ magnétique utilisé,
sont détectés,
au moins l'une des valeurs seuil du système de détection de vitesse, de l'unité d'évaluation (150, 240) et/ou d'un appareil de commande du deux-roues (100) étant destinée à être transmise au moyen d'une transmission sans fil.

16. Unité d'analyse selon l'une quelconque des revendications 13 à 15, **caractérisée en ce que** l'unité de calcul (200) est réalisée de telle sorte qu'elle
• transmet, en particulier sans fil, le message d'erreur généré au système de détection de vitesse, à l'unité d'évaluation (150, 240) et/ou à une unité de traitement (260).
